# EUROPEAN PATENT SPECIFICATION

(11) **EP 3 491 905 B1**
(45) Date of publication and mention of the grant of the patent: **27.01.2021**
(21) Application number: 18206761.1
(22) Date of filing: 16.11.2018
(51) Int. Cl.: A01B 73/00, A01B 29/02, A01B 49/02, A01B 73/04

(54) **SYSTEM FOR FOLDING AND UNFOLDING IMPLEMENT STRUCTURES ON AN AGRICULTURAL MACHINE**
SYSTEM ZUM EIN- UND AUSKLAPPEN VON ARBEITSGERÄTESTRUKTUREN AN EINER LANDWIRTSCHAFTLICHEN MASCHINE
SYSTÈME DE PLIAGE ET DE DÉPLIAGE DE STRUCTURES D'OUTILS SUR UNE MACHINE AGRICOLE

(30) Priority: 04.12.2017 ES 201731485 U
(43) Date of publication of application: 05.06.2019
(73) Proprietor: Izuel Jordán, David, 22807 Losanglis-Ayerbe (Huesca) (ES); Torrecilla Domper, Felipe, 22004 Huesca (ES)
(72) Inventor: Izuel Jordán, David, 22807 Losanglis-Ayerbe (Huesca) (ES); Torrecilla Domper, Felipe, 22004 Huesca (ES)
(74) Representative: Ungria López, Javier

(56) References cited:
- WO-A1-2017/023177
- CA-A1- 2 967 142
- DE-U1- 8 712 640
- US-A- 4 213 628
- US-A1- 2015 020 718

## Description

### Object of the invention

The present invention relates to a system for folding and unfolding implement structures on agricultural machines and its object is to facilitate the folding and unfolding of two structures into which the implement is divided, such that in an unfolded working position, the two assemblages of structures with their implements are aligned in a same transversal direction, and in a folded transport position, said structure assemblages with their implements are positioned in two parallel transversal directions one behind the other; such at the structure assemblages with their implements must be folded because their working length exceeds the measurements for road transport, such that the folding of the two structure assemblages with their implements is done on a horizontal plane, with both assemblages positioned in a central part of the agricultural machine.

The invention is defined by the subject-matter of independent claim 1. Particular embodiments of the invention are defined in the dependent claims.

### Background of the invention and technical problem to be solved

As is known in the agricultural sector, many machines exist for the preparation of the ground to achieve the best conditions for seeding and sprouting of seeds, whose agricultural machines are pulled by the corresponding tractor vehicle, such that, in theory, said agricultural machines present a width that allows them to travel normally by road, allowing them to be moved from the storage location to the fields that are to be worked, and back again.

With the evolution of technology, there are now powerful tractor vehicles available that are capable of pulling agricultural machines that implement several types of equipment for different work tasks and agricultural machines of considerable width; all for the purpose of increasing the profitability of the work.

Thus, in cases in which the width of the agricultural machine exceeds the permitted width for road travel, said machines are equipped with different means of positioning or folding, which allows them to travel on those routes to and from the location of the fields.

Examples of agricultural machines equipped with means for positioning or folding implements are given, among others, in the following documents: WO2017/023177A1, CA2967142A1, DE8712640U1, US4213628A and US2015/020718A1. Nevertheless, none of said documents disclose a system having all the technical features of the present invention, as claimed. In addition, none of said documents disclose a system wherein the folding of said implements is done, exclusively, on a horizontal plane.

Focusing on agricultural machines equipped with rollers, which are useful for different tasks such as leaving a surface as flat as possible and free of stones that could affect other machines in later work, such as collection by the corresponding harvester machine or compacting of the ground to consolidate the seeded surface and which may facilitate the sprouting of the seeds, we can say that said agricultural machines equipped with rollers may take the form of a single roller, so that during work tasks, it is in the transversal position with respect to the longitudinal direction that corresponds to the direction of motion of the tractor vehicle, and for routes on roads, the roller adopts a horizontal position, with the drawback that the length of the vehicle is increased considerably.

Likewise, in towed agricultural machines equipped with rollers, whose rollers are formed by two halves, folding can be carried out by means of hydraulic actuation, with the two rollers positioned in the vertical position on each side of the chassis of the agricultural machine, with the folding system affixed and secured by means of hydraulic interlockings and bolts affixed manually.

Likewise, in cases in which the roller is made up of three parts, one central part arranged in correspondence with the chassis and one part on each side of said chassis, folding is done by means of hydraulic actuation of each lateral part, positioning them in the vertical position, with the folding system affixed and secured by means of hydraulic interlockings and bolts affixed manually.

Lastly, we can consider the folding means in which the roller, made up of two halves, folds into the horizontal position, with the two halves of the roller positioned in the longitudinal direction, by means of actuation similar to that described above, but presenting the drawback that the transport length of the machine is increased considerably.

In short, the existing folding means for this type of towed agricultural machines equipped with rollers present numerous drawbacks in regard to safety as well as efficiency in work, and they also pose a problem of dimensions.

These existing folding means also significantly limit the functionality of the equipment, because the means of folding for road transport take up a considerable amount of space, preventing the optimization of the machine and also preventing it from being combined with another type of implement.

Another type of implement, different from the rollers mentioned above, present folding means similar to those of the aforementioned rollers.

### Description of the invention

The solution of the technical problem is achieved by the subject-matter of independent claim 1, defining per se the invention. Particular embodiments of the invention are defined in the dependent claims.

The present specification describes a system for folding and unfolding implement structures on agricultural machines, which comprises a first structure that supports a first implement and a second structure that supports a second implement; wherein the first structure and the second structure are associated with a chassis of the machine; and wherein the first implement and the second implement are configured to operate in the conventional manner when the agricultural machine is used.

In an unfolded working position, the two implements are aligned in a transversal direction with the sum of the two widths of the two implements, while in a folded transport position, the two implements are positioned in parallel one behind the other in different transversal directions.

The first structure with its first implement is associated with a first lateral crossbar of the chassis through a first fixed support; wherein said first structure is configured to move guided in the transversal direction along a first fixed support;
The second structure with its second implement is associated with a second lateral crossbar of the chassis through a second moveable support that is configured to move in a longitudinal direction guided along the second lateral crossbar of the chassis; wherein said second structure is configured to move guided in the transversal direction along a second moveable support.

The first structure and the second structure comprise several pairs of lateral pieces and several pairs of parallel arms joined at their ends to the lateral pieces; wherein the first implement and second implement are connected at their ends to the lateral pieces.

The first fixed support includes, in transversal directions, a first pair of tubular elements into which the parallel arms of the first structure are inserted and guided.

Likewise, the second moveable support includes, in transversal directions, a second pair of tubular elements into which the parallel arms of the second structure are inserted and guided.

The system for folding and unfolding of the invention also comprises a first hydraulic cylinder connected by a first end to the second moveable support, and by a second end, the first hydraulic cylinder connects to a fixed point of the chassis of the machine; wherein said first hydraulic cylinder is arranged in a longitudinal direction parallel to the second lateral crossbar of the chassis to move the second moveable support.

The system for folding and unfolding of the invention also comprises a second cylinder connected by a first end to the first structure, and by a second end, the second hydraulic cylinder connects to the first fixed support; wherein said first structure is configured to move guided in the transversal direction along the first fixed support by means of said second cylinder.

The system for folding and unfolding of the invention also comprises a third hydraulic cylinder that connects at one end to the second structure, and by a second end, the third hydraulic cylinder connects to the second moveable support; wherein said second structure is configured to move guided in the transversal direction along the second moveable support by means of said third hydraulic cylinder.

To complement the description provided below, and for the purpose of helping to make the characteristics of the invention more readily understandable, this specification is accompanied by a set of drawings which, by way of illustration and not limitation, represent the most characteristic details of the invention.

### Brief description of the figures

**Figure 1****.** Shows a perspective view of an agricultural machine that includes the system for folding and unfolding implement structures that is the object of the invention and with the implements taking the form of the corresponding rollers. The system basically comprises a first structure with a first roller and a second structure with a second roller that can be folded and unfolded in a horizontal plane, reaching stable positions in transversal directions.
**Figure 2****.** Shows a perspective view of the agricultural machine; wherein the two structures with their rollers are placed in a folded transport position, in which the assemblage of the first structure with its first roller and the assemblage of the second structure with its second roller are positioned one behind the other in a central zone of the agricultural machine.
**Figure 3****.** Shows a plan view of the agricultural machine, wherein the assemblages of the structures and rollers are shifted and positioned in correspondence with an intermediate step in the folding process.
**Figure 4****.** Shows a first perspective view of a second moveable support associated with a second lateral crossbar of a chassis of an agricultural machine.
**Figure 5****.** Shows a second perspective view of the second moveable support, which highlights an anchor point of a first hydraulic cylinder that is responsible for the longitudinal movement of the second moveable support.
**Figure 6****.** Shows a perspective view that represents the configuration of each one of the assemblages of the first and second structures along with the first and second rollers.
**Figure 7****.** Shows a detailed view of the mounting of the first hydraulic cylinder for the actuation of the second moveable support.
**Figure 8****.** Shows a close up view of the mounting of a second hydraulic cylinder that is responsible for moving the first structure with its first roller.

### Description of a preferred embodiment

The aforementioned figures, according to the numbering adopted, show how the system for folding and unfolding implement structures, with identical configurations and taking the form of, by way of example, rollers, on an agricultural machine 1 comprises a first structure 3 that supports a first roller 3a and a second structure 4 that supports a second roller 4a; wherein the two rollers 3a, 4a are configured to perform the work of flattening and compacting the ground; and wherein the object of the system of the invention is to position the first structure 3 and second structure 4, along with their respective rollers, first 3a and second 4a, in a stable position selected between an unfolded working position and a folded transport position.

The agricultural machine 1 is designed to be towed by a tractor vehicle not shown in the figures.

Thus, in the unfolded working position, the first structure 3 and the second structure 4, together with their respective rollers, first roller 3a and second roller 4a are aligned in a longitudinal direction of the agricultural machine 1 corresponding to the forward movement of the tractor vehicle, while in the folded transport position, said structures 3, 4, together with their rollers 3a, 4a, are positioned in two parallel transversal directions in a central zone of the machine 1, one behind the other, maintaining the measurements for transport by road; wherein said measurements correspond to the width of each one of the two structures 3, 4, and not to the sum of the two widths of the two structures 3, 4 as is the case in the unfolded working position.

To do this, each one of the two structures 3, 4 comprises a pair of lateral pieces 5 and a pair of parallel arms 6 connected at their ends to the pair of lateral pieces 5; wherein each one of the rollers 3a, 4a is connected by their two opposing ends in an articulated fashion, to allow them to rotate, on the pair of lateral pieces 5.

If the implement to be folded consists of a different implement that does not rotate while working, for example, in a cultivator, it will be installed on the pair of lateral pieces 5 in a fixed manner, in other words, such that it does not rotate.

The first structure 3 is attached to a first fixed support 7 solidly affixed to a first lateral crossbar 8 that forms part of a chassis 1a of the agricultural machine 1; while the second structure 4 is associated with a second moveable support 9 connected to a second lateral crossbar 10 of the chassis 1a of the agricultural machine 1.

The first fixed support 7 includes, in transversal directions, a first pair of tubular elements 11 into which the parallel arms 6 of the first structure 3 that supports the first roller 3a are inserted and guided; wherein the first structure 3 can move guided along the tubular elements 11 of the first fixed support 7.

On the other hand, the second moveable support 9 includes, in transversal directions, a second pair of tubular elements 12 into which the parallel arms 6 of the second structure 4 that supports the second roller 4a are inserted and guided; wherein the second structure 4 can move guided along the tubular elements 12 of the second moveable support 9.

Said second moveable support 9 is associated with a first hydraulic cylinder 13, in a longitudinal direction. Said first hydraulic cylinder 13 is connected by a first end 14 to the second moveable support 9, and by a second end 15, the first hydraulic cylinder 13 connects to a fixed point of the chassis 1a of the machine, such that when the first hydraulic cylinder 13 is actuated, it allows longitudinal movement of the second moveable support 9, with respect to the second lateral crossbar 10 of the chassis 1a; wherein the movement of the second moveable support 9 pulls the assemblage of the second structure 4 and the second roller 4a along with it.

Likewise, a second hydraulic cylinder 16 connects at one end to the first structure 3 of the first roller 3a, and at a second end, the second hydraulic cylinder 16 connects to the first fixed support 7; such that when the second hydraulic cylinder 16 is actuated, the transversal movement of the first roller 3a is produced, from its unfolded working position to the folded transport position and vice-versa.

Likewise, the second moveable support 9 is moved in the transversal direction by a third hydraulic cylinder 17 that connects at one end to the second structure 4 of the second roller 4a, and at a second end, the third hydraulic cylinder 17 connects to the second moveable support 9, such that with the actuation of the hydraulic cylinder 17, the transversal movement of the second roller 4a is produced, from its unfolded working position to the folded transport position and vice-versa.

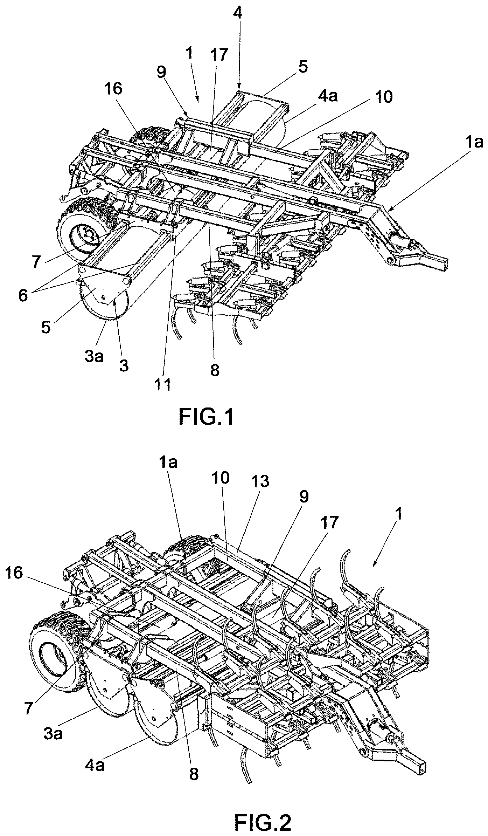

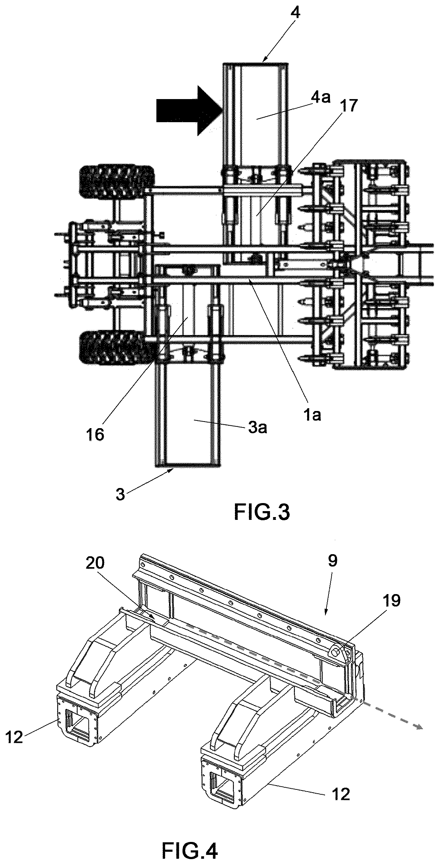

Making reference to the figures, they show how, starting from the working position, represented in figure 1, in which the first 3 and second 4 structures, relative to the first roller 3a and the second roller 4a, are aligned transversally, first, the first hydraulic cylinder 13 will be actuated, moving the second moveable support 9 longitudinally, and with it, the second structure 4 of the second roller 4a, obtaining the position shown in figure 3, which shows the shifting of the first structure 3 and second structure 4 with their respective rollers 3a, 4a.

Second, considering said position shown in figure 3, the second 16 and third 17 hydraulic cylinders will then be actuated, moving the first 3 and second 4 structures along with the rollers 3a, 4a, in the transversal direction towards the folded positions; leaving them positioned in the center of the chassis 1a of the machine, as shown in figure 2; wherein the first roller 3a and the second roller 4a are arranged in parallel and transversal directions one behind the other in the folded position for road transport.

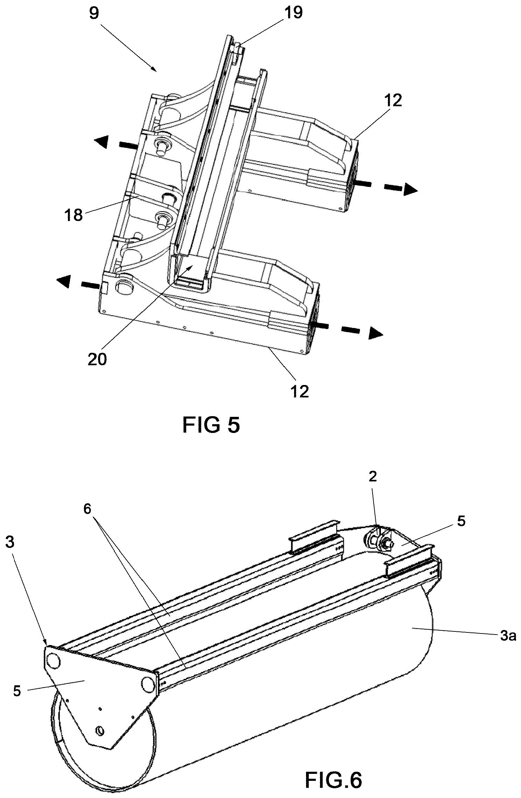

Figures 4 and 5 shown two views of the second moveable support 9 that includes a box shape 20 that acts as a channel into which the second lateral crossbar 10 of the chassis 1a of the machine 1 is inserted. Said second moveable support 9 includes a point 19 as an anchor element of the first end 14 of the first hydraulic cylinder 13. Figure 5 shows one of the fixed anchor elements 18 of the third hydraulic cylinder 17 for transversal actuation of the second structure 4 relative to the second roller 4a.

Figure 6 shows the configuration relative to the assemblage of the first structure 3 with its first roller 3a, also showing the pair of lateral pieces 5 on which the first roller 3a configured to roll, and the pair of parallel arms 6, as well as the anchor 2 of the corresponding second hydraulic cylinder 16 for transversal actuation. It should be noted that the second structure 4 with its second roller 4b has the same configuration shown in said figure 6.

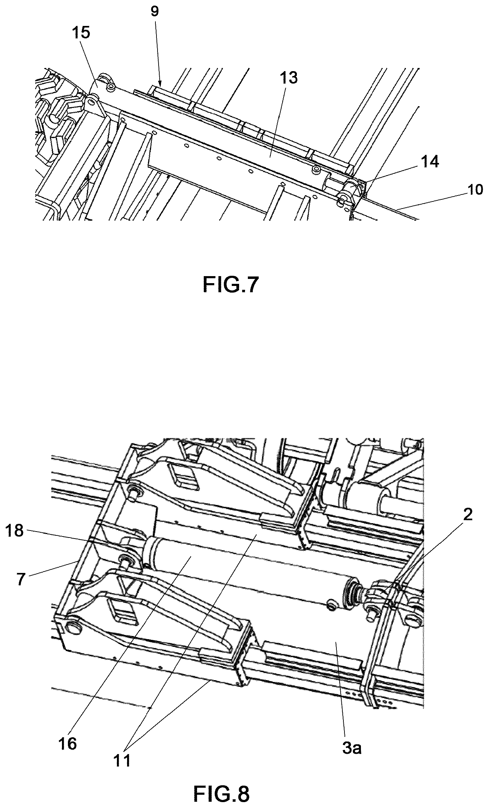

Figure 7 shows the expanded close up view of figure 1, relative to the mounting of the first hydraulic cylinder 13, having eliminated a protective cover of the same, showing how said first hydraulic cylinder 13 is positioned above the second lateral crossbar 10 of the chassis 1a of the agricultural machine 1, and how at the first end 14 it has been affixed to the anchor point 19 and at its second end 15, it has been affixed to the chassis 1a of the machine 1, such that when the first hydraulic cylinder 13 is actuated, the second moveable support 9 is moved along the second lateral crossbar 10.

Figure 8 shows an expanded close up view of the second hydraulic cylinder 16, double acting; which shows how said second hydraulic cylinder 16 is arranged between the first fixed support 7 and the end of the first structure 3 of the first roller 3a; wherein the actuation of the second hydraulic cylinder 16 produces the transversal movement of the first structure 3 of the first roller 3a.

In short, the described folding and unfolding system of the invention allows the first roller 3a and the second roller 4a to adopt one working position and one transport position, moving from one position to the other simply, quickly and with complete safety.

The operation for folding and unfolding is carried out in two steps: a first step, considering its unfolded working position, by means of the longitudinal movement of the second structure 4 that supports the second roller 4a, and a second step by means of the transversal movement of the first 3 and second 4 structures along with their first 3a and second 4a rollers; and vice-versa, starting from the folded transport position.

In addition, it should be noted that while in the folded transport position, the top of the chassis 1a is clear, allowing the combination with other functions, such as the installation of hoppers, tanks, etc.

Also, an implement for other farming tasks may be installed on the front of the towed agricultural machine 1, such as a conventional cultivator that can also be folded; and on the rear of the machine 1, a hook with a variable height may be installed to hook other complements, such as a seeder.

## Claims

1. **A system for folding and unfolding implement structures on an agricultural machine**, which comprises a first structure (3) that supports a first implement (3a) and a second structure (4) that supports a second implement (4a); wherein the first structure (3) and the second structure (4) are associated with a chassis (1a) of the machine (1); and wherein the first implement (3a) and the second implement (4a) are configured to remain fixed or to rotate; wherein:
- the first structure (3) is associated with a first lateral crossbar (8) of the chassis (1a) through a first fixed support (7); wherein said first structure (3) is configured to move guided in the transversal direction along a first fixed support (7);
- the second structure (4) is associated with a second lateral crossbar (10) of the chassis (1a) through a second moveable support (9) that is configured to move in a longitudinal direction guided along the second lateral crossbar (10) of the chassis (1a); wherein said second structure (4) is configured to move guided in the transversal direction along a second moveable support (9);
- a first hydraulic cylinder (13) is connected by a first end (14) to the second moveable support (9), and by a second end (15), the first hydraulic cylinder (13) connects to a fixed point of the chassis (1a) of the machine (1); wherein said first hydraulic cylinder (13) is arranged in a longitudinal direction parallel to the second lateral crossbar (10) of the chassis (1a) to move the second moveable support (9);
- a second hydraulic cylinder (16) is connected by a first end to the first structure (3), and by a second end, the second hydraulic cylinder (16) connects to the first fixed support (7); wherein said first structure (3) is configured to move guided in the transversal direction along the first fixed support (7) by means of said second cylinder (16); and
- a third hydraulic cylinder (17) that connects at one end to the second structure (4), and by a second end, the third hydraulic cylinder (17) connects to the second moveable support (9); wherein said second structure (4) is configured to move guided in the transversal direction along the second moveable support (9) by means of said third hydraulic cylinder (17).

2. **The system for folding and unfolding implement structures on an agricultural machine,** according to claim 1, **characterized in that** the first structure (3) and the second structure (4) comprise several pairs of lateral pieces (5) and several pairs of parallel arms (6) joined at their ends to the lateral pieces (5); wherein the first implement (3a) and second implement (4a) are connected at their ends to the lateral pieces (5).

3. **The system for folding and unfolding implement structures on an agricultural machine,** according to claim 2, **characterized in that**:
- the first fixed support (7) includes, in transversal directions, a first pair of tubular elements (11) into which the parallel arms (6) of the first structure (3) are inserted and guided;
- the second moveable support (9) includes, in transversal directions, a second pair of tubular elements (12) into which the parallel arms (6) of the second structure (4) are inserted and guided.

## Patentansprüche

1. System zum Zusammenklappen und Ausklappen von Anbaugerätestrukturen an einer Landmaschine, das eine erste Struktur (3), die ein erstes Anbaugerät (3a) trägt, und eine zweite Struktur (4), die ein zweites Anbaugerät (4a) trägt, umfasst; wobei die erste Struktur (3) und die zweite Struktur (4) mit einem Chassis (1a) der Maschine (1) assoziiert sind und wobei das erste Anbaugerät (3a) und das zweite Anbaugerät (4a) dazu konfiguriert sind, feststehend zu bleiben oder sich zu drehen; wobei:
- die erste Struktur (3) mit einer ersten lateralen Querstange (8) des Chassis (1a) durch einen ersten, feststehenden Träger (7) assoziiert ist; wobei die erste Struktur (3) dazu konfiguriert ist, sich geführt in der Querrichtung entlang einem ersten, feststehenden Träger (7) zu bewegen;
- die zweite Struktur (4) mit einer zweiten lateralen Querstange (10) des Chassis (1a) durch einen zweiten, beweglichen Träger (9) assoziiert ist, der dazu konfiguriert ist, sich in einer Längsrichtung geführt entlang der zweiten lateralen Querstange (10) des Chassis (1a) zu bewegen; wobei die zweite Struktur (4) dazu konfiguriert ist, sich geführt in der Querrichtung entlang einem zweiten, beweglichen Träger (9) zu bewegen;
- ein erster Hydraulikzylinder (13) durch ein erstes Ende (14) mit dem zweiten, beweglichen Träger (9) verbunden ist und der erste Hydraulikzylinder (14) sich durch ein zweites Ende (15) mit einem feststehenden Punkt des Chassis (1a) der Maschine (1) verbindet; wobei der erste Hydraulikzylinder (13) in einer Längsrichtung parallel zu der zweiten lateralen Querstange (10) des Chassis (1a) eingerichtet ist, um den zweiten, beweglichen Träger (9) zu bewegen;
- ein zweiter Hydraulikzylinder (16) durch ein erstes Ende mit der ersten Struktur (3) verbunden ist und der zweite Hydraulikzylinder (16) sich durch ein zweites Ende mit dem ersten, feststehenden Träger (7) verbindet; wobei die erste Struktur (3) dazu konfiguriert ist, sich mithilfe des zweiten Zylinders (16) geführt in der Querrichtung entlang dem ersten, feststehenden Träger (7) zu bewegen; und
- ein dritter Hydraulikzylinder (17) sich an einem Ende mit der zweiten Struktur (4) verbindet und der dritte Hydraulikzylinder (17) sich durch ein zweites Ende mit dem zweiten, beweglichen Träger (9) verbindet; wobei die zweite Struktur (4) dazu konfiguriert ist, sich mithilfe des dritten Hydraulikzylinders (17) geführt in der Querrichtung entlang dem zweiten, beweglichen Träger (9) zu bewegen.

2. System zum Zusammenklappen und Ausklappen von Anbaugerätestrukturen an einer Landmaschine nach Anspruch 1, **dadurch gekennzeichnet, dass** die erste Struktur (3) und die zweite Struktur (4) mehrere Paare von lateralen Teilen (5) und mehrere Paare von parallelen Armen (6), die an ihren Enden an die lateralen Teile (5) angekoppelt sind, umfasst; wobei das erste Anbaugerät (3a) und das zweite Anbaugerät (4a) an ihren Enden mit den lateralen Teilen (5) verbunden sind.

3. System zum Zusammenklappen und Ausklappen von Anbaugerätestrukturen an einer Landmaschine nach Anspruch 2, **dadurch gekennzeichnet, dass**:
- der erste, feststehende Träger (7) in Querrichtungen ein erstes Paar von röhrenförmigen Elementen (11) beinhaltet, in die bzw. in denen die parallelen Arme (6) der ersten Struktur (3) eingesetzt und geführt werden;
- der zweite, bewegliche Träger (9) in Querrichtungen ein zweites Paar von röhrenförmigen Elementen (12) beinhaltet, in die bzw. in denen die parallelen Arme (6) der zweiten Struktur (4) eingesetzt und geführt werden.

## Revendications

1. Système de pliage et de dépliage de structures d'outils sur une machine agricole, lequel comprend une première structure (3) qui supporte un premier outil (3a) et une seconde structure (4) qui supporte un second outil (4a) ; dans lequel la première structure (3) et la seconde structure (4) sont associées avec un châssis (la) de la machine (1) ; et dans lequel le premier outil (3a) et le second outil (4a) sont configurés pour rester fixes ou pour tourner ; dans lequel :
- la première structure (3) est associée avec une première barre transversale latérale (8) du châssis (la) par un premier support fixe (7), ladite première structure (3) étant configurée pour se déplacer guidée dans la direction transversale le long d'un premier support fixe (7) ;
- la seconde structure (4) est associée avec une seconde barre transversale latérale (10) du châssis (la) par un second support déplaçable (9) qui est configuré pour se déplacer dans une direction longitudinale guidé le long de la seconde barre transversale latérale (10) du châssis (la), ladite seconde structure (4) étant configurée pour se déplacer guidée dans la direction transversale le long d'un second support déplaçable (9) ;
- un premier vérin hydraulique (13) est relié par une première extrémité (14) au second support déplaçable (9) et par une seconde extrémité (15), le premier vérin hydraulique (13) est relié à un point fixe du châssis (la) du la machine (1), ledit premier vérin hydraulique (13) étant disposé dans une direction longitudinale parallèle à la seconde barre transversale latérale (10) du châssis (la) pour déplacer le second support déplaçable (9) ;
- un second vérin hydraulique (16) est relié par une première extrémité à la première structure (3), et par une seconde extrémité, le second vérin hydraulique (16) est relié au premier support fixe (7), ladite première structure (3) étant configurée pour se déplacer guidée dans la direction transversale le long du premier support fixe (7) au moyen dudit second vérin (16) ; et
- un troisième vérin hydraulique (17) qui est relié à une extrémité à la seconde structure (4), et par une seconde extrémité, le troisième vérin hydraulique (17) est relié au second support déplaçable (9), ladite seconde structure (4) étant configurée pour se déplacer guidée dans la direction transversale le long du second support déplaçable (9) au moyen dudit troisième vérin hydraulique (17).

2. Système de pliage et de dépliage de structures d'outils sur une machine agricole, selon la revendication 1, **caractérisé par le fait que** la première structure (3) et la seconde structure (4) comprennent plusieurs paires de pièces latérales (5) et plusieurs paires de bras parallèles (6) réunis à leurs extrémités aux pièces latérales (5), le premier outil (3a) et le second outil (4a) étant reliés à leurs extrémités aux pièces latérales (5).

3. Système de pliage et de dépliage de structures d'outils sur une machine agricole, selon la revendication 2, **caractérisé par le fait que** :
- le premier support fixe (7) comprend, dans des directions transversales, une première paire d'éléments tubulaires (11) dans lesquels les bras parallèles (6) de la première structure (3) sont introduits et guidés ;
- le second support déplaçable (9) comprend, dans des directions transversales, une seconde paire d'éléments tubulaires (12) dans lesquels les bras parallèles (6) de la seconde structure (4) sont introduits et guidés.
